(19) Europäisches Patentamt

European Patent Office

Office européen des brevets

(11) Veröffentlichungsnummer: **0 269 787 B1**

(12) **EUROPÄISCHE PATENTSCHRIFT**

(45) Veröffentlichungstag der Patentschrift: **22.01.92**

(51) Int. Cl.⁵: **H04N 7/08**

(21) Anmeldenummer: **87111305.6**

(22) Anmeldetag: **05.08.87**

(54) **Verfahren zur Übertragung von Faksimiledaten innerhalb eines Videokanals.**

(30) Priorität: **13.10.86 DE 3634833**

(43) Veröffentlichungstag der Anmeldung:
**08.06.88 Patentblatt 88/23**

(45) Bekanntmachung des Hinweises auf die
Patenterteilung:
**22.01.92 Patentblatt 92/04**

(84) Benannte Vertragsstaaten:
**CH FR GB IT LI NL**

(56) Entgegenhaltungen:
**DE-A- 2 628 709**
**FR-A- 2 292 389**
**FR-A- 2 345 872**
**US-A- 3 726 992**

(73) Patentinhaber: **TELENORMA GMBH**
**Mainzer Landstrasse 128-146**
**W-6000 Frankfurt/Main(DE)**

(72) Erfinder: **Loos, Rolf, Dipl.-Ing.**
**Konrad Adenauer Strasse 8**
**W-6116 Eppertshausen(DE)**
Erfinder: **Weis, Peter, Dipl.-Ing.**
**Lindenstrasse 32**
**W-6072 Dreieich-Sprendlingen(DE)**
Erfinder: **Mohr, Peter, Dipl.-Ing.**
**Wiesenweg 14**
**W-6270 Idstein 4(DE)**

## Beschreibung

Die Erfindung betrifft ein Verfahren zur Erweiterung der für die Übertragung von Dokumenteninformation vorgesehenen Kanalkapazität innerhalb eines für die Übertragung von Videoinformation vorhandenen digitalen Übertragungskanals nach dem Oberbegriff des Patentanspruches 1.

Aus der DE-A-26 28 709 ist ein Verfahren für eine Fernsehtelefonanlage zum gemeinsamen Betrachten eines Bildes durch zwei Teilnehmer bekannt. Dabei wird von der Kamera entweder ein Bild des Teilnehmers oder über einen Spiegel das Abbild eines Dokumentes, eines Schriftstückes oder einer Zeichnung aufgenommen und über den Bildkanal zum Bildwiedergabegerät des Gesprächspartners übertragen. Es sind besondere Umschaltemittel vorgesehen, womit erreicht wird, daß auf beiden Bildschirmen das gleiche Standbild erscheint. Parallel dazu besteht noch eine Fernsprechverbindung, so daß die Teilnehmer über das auf den Bildschirmen angezeigte Bild diskutieren können. Es ist zusätzlich vorgesehen, daß die Teilnehmer mit Hilfe eines Koordinateneingabegerätes am angezeigten Bild Änderungen vornehmen können. Während einer derartigen Bildübertragung können bei diesem Verfahren nicht gleichzeitig auch bewegte Bilder übertragen werden. Außerdem ist die Auflösung einer nach der Fernsehnorm (625 Zeilen) übertragenen Vorlage für viele Anwendungsfälle nicht hoch genug, so daß Einzelheiten möglicherweise nicht mit ausreichender Deutlichkeit wiedergegeben werden können.

Es ist bekannt, Dokumente, Schriftstücke oder Zeichnungen über das Fernmeldenetz zu übertragen, wobei eine wesentlich höhere Auflösung verlangt wird. In dem Fachbuch "Testkommunikation heute und morgen", herausgegeben von der Arbeitsgemeinschaft des VDE-Bezirksvereins Frankfurt am Main, ist in einem Aufsatz über Stand und Entwicklung der Telefax-Geräte auf Seite 58 beschrieben, daß eine horizontale Punktdichte von 8 Punkten pro Millimeter und in vertikaler Richtung eine Auflösung von 3,85 Zeilen pro Millimeter als Norm vorgesehen ist. Bei einer derart hohen Auflösung von zu übertragenden Schriftstücken, Dokumenten oder Zeichnungen ergeben sich relativ große Datenmengen, wenn beispielsweise eine DIN-A4-Seite übertragen werden soll. Bei der analogen Übertragung einer DIN-A4-Seite durch ein Telefaxgerät der Gruppe 1 ist eine Übertragungsdauer von 6 Minuten vorgesehen.Diese Übertragungsdauer kann bei Geräten der Gruppe 2 etwa um die Hälfte verringert werden. Telefaxgeräte der Gruppen 3 und 4, bei denen die Übertragung des Bildinhaltes digital stattfindet, erreichen eine höhere Übertragungsgeschwindigkeit, so daß eine DIN-A4-Seite in etwa 1 Minute übertragen werden kann. Übertragungszeiten im Minutenbereich würden sich jedoch störend auswirken, wenn eine Bildvorlage von zwei Teilnehmern diskutiert werden soll, wie dies in der DE-A-26 28 709 beschrieben ist.

Die Aufgabe der Erfindung besteht darin, ein Verfahren anzugeben, womit es möglich ist, parallel zu einer bestehenden Bildfernsprechverbindung mit bewegten Bildern Dokumente, Schriftstücke und Zeichnungen mit einer hohen Auflösung zu übertragen, wobei kein nennenswerter Zeitverzug auftritt.

Es wird dabei davon ausgegangen, daß die in einem Videosignal zur Verfügung stehende Austastlücke benutzt wird, um die ein Dokument, Schriftstück oder Zeichnung beschreibende Information, im folgenden Dokumenteninformation genannt, zu übertragen.

Diese Aufgabe wird durch eine Merkmalskombination gelöst, wie sie im Patentanspruch 1 angegeben ist.

Damit wird in vorteil-hafter Weise erreicht, daß für eine Übertragung von Dokumenteninformation nicht nur die vertikale Austastlücke des Videosignals, wofür nur etwa 8 % der gesamten Übertragungszeit zur Verfügung stehen, nutzbar sind, sondern daß je nach Beschaffenheit des Videobildes in Abhängigkeit der stattfindenden Bewegung zusätzliche Übertragungszeit zur Verfügung gestellt werden kann. In Extremfällen kann bei vorübergehend unbewegten Bildern sogar die gesamte Übertragungszeit für die Dokumenteninformation zur Verfügung gestellt werden. Es ergibt sich also kein nennenswerter Zeitverzug, wenn zum Zwecke der gegenseitigen Absprache Dokumenteninformation übertragen wird, die auf der Sendeseite und auch auf der Empfangsseite jeweils auf Bildschirmen gleichartig dargestellt wird.

Weiterbildungen der Erfindung ergeben sich aus den Unteransprüchen. Daraus ergibt sich, daß durch die zeilenweise Analyse des Videosignals beliebig viele unbewegte Zeilen für die Übertragung von Dokumenteninformation mit benutzt werden können. Da der diese Analyse vornehmende Bewegungserkenner immer dann aktiviert wird, wenn Dokumenteninformation zu übertragen ist, tritt der Vorteil der Erfindung auch dann ein, wenn handschriftliche Änderungen oder Hinweise an Dokumenten zu übertragen sind, wobei auch dann keine störende Zeitverzögerung auftritt.

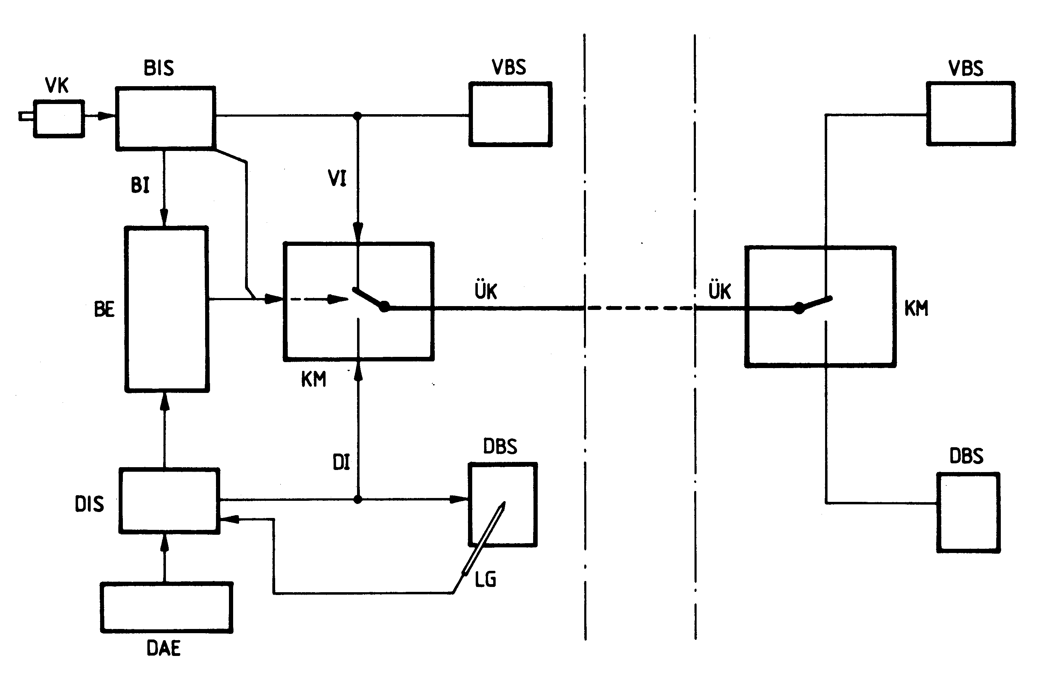

Ein Ausführungsbeispiel der Erfindung wird nachfolgend anhand einer Zeichnung näher erläutert. In der Zeichnung ist ein Übersichtsschaltbild für nur eine Übertragungsrichtung dargestellt, wobei eine sendende Stelle über einen Übertragungskanal ÜK mit einer empfangenden Stelle verbunden ist. Dieser Übertragungskanal ÜK ist selbstverständlich in der Praxis doppelt gerichtet, auch wenn in der Zeichnung an der empfangenden Stelle die für das Senden von Bild- oder Dokumenteninfomation ebenfalls vorhandenen Einrichtungen nicht dargestellt sind.

Die beiden miteinander verbundenen Endgeräte sind dazu geeignet, sowohl bewegte Bilder als auch zusätzlich Standbilder zur jeweiligen Gegenstelle zu übertragen. Die bewegten Bilder werden dabei wechselseitig auf einem Videobildschirm VBS angezeigt, wobei die bekannte Fernsehnorm Anwendung findet. Für die Anzeige von Standbildern, wobei vorwiegend auf beiden Seiten jeweils die gleiche Anzeige erscheint, ist ein besonderer Dokumentenbildschirm DBS vorgesehen, der ein höheres Auflösungsvermögen als der Videobildschirm VBS besitzt.

Für die Übertragung von bewegten Bildern ist in bekannter Weise eine Videokamera VK vorgesehen, womit die Bildinformation erfaßt und einer Bildinformationssteuerung BIS angeboten wird. Dort wird die Bildinformation digitalisiert und glangt als Videoinformation über einen Kanalmischer KM zum Übertragungskanal ÜK zum Videobildschirm VBS der Empfangsstelle.

Die Bildinformation BI wird außerdem einem Bewegungserkenner BE angeboten. Darin enthalten sind Speicher- und Steuereinrichtungen, womit es möglich ist, die von der Bildinformationssteuerung laufend angebotene Bildinformation zeilenweise zu analysieren, so daß festgestellt werden kann, in welchen Bereichen eines Bildes Änderungen aufgetreten sind, d. h. eine Bewegung stattgefunden hat. Wenn dabei Zeilen festgestellt werden, die keine Bewegungen aufweisen, so wird ein Steuersignal erzeugt, welches den Kanalmischer KM zu einer Umschaltung veranlaßt, womit der Übertragungskanal ÜK für die Übertragung von Dokumenteninformation DI zur Verfügung gestellt wird.

Für das Übertragen von Dokumenteninformation DI ist eine Dokumentenabtasteinrichtung DAE vorgesehen, womit eine Vorlage entsprechend dem Standard moderner Telefax-Geräte mit hohen Auflösungsvermögen abgetastet wird. Die dabei entstehende Informationsmenge wird einer Dokumenteninformationssteuerung DIS angeboten und dort in zur digitalen Übertragung geeignete Daten umgeformt. Die so entstandene Dokumenteninformation DI gelangt nun sowohl auf den eigenen Dokumentenbildschirm DBS der sendenden Station als auch über den umgeschalteten Kanalmischer KM auf den Übertragungskanal ÜK. Dabei muß jedoch auch der an der Empfangsstelle befindliche Kanalmischer KM umgeschaltet werden, damit die Dokumenteninformation auf den dortigen Dokumentenbildschirm DBS gelangen kann. Dies geschieht dadurch, daß der Dokumenteninformation DI ein besonderes Datenwort vorangestellt wird, welches im Kanalmischer KM an der Empfangsstation durch einen besonderen, nicht dargestellten Empfänger empfangen und ausgewertet wird und die erforderliche Umschaltung bewirkt.

Die Umschaltung der Kanalmischer KM wird regelmäßig auch dann vorgenommen, wenn bei der Videoinformation VI die vertikale Austastlücke erscheint. Dies kann entweder, wie in der Zeichnung dargestellt, durch einen besonderen Befehl geschehen, der von der Bildinformationsstelle BIS erzeugt wird oder durch ein besonderes Datenwort, welches in den Datenstrom der Videoinformation VI eingefügt wird. Wenn dieses besondere Datenwort durch die am Übertragungskanal ÜK angeschalteten Empfänger erkannt wird, so erfolgt sowohl bei der sendenden Station als auch bei der Empfangsstation die Umschaltung der Kanalmischer KM, so daß nun Dokumenteninformation DI übertragen werden kann. Diese zuletzt beschriebene Art der Umschaltung findet regelmäßig zu Beginn der vertikalen Austastlücke statt. Selbstverständlich muß dann, wenn die Austastlücke zu Ende ist, ebenfalls ein besonderes Datenwort abgegeben werden, bzw. an der sendenden Stelle ein Rückschaltebefehl erzeugt werden, womit die Kanalmischer KM wieder in die Ausgangslage, so wie in der Zeichnung dargestellt, zurückkehren, damit nun wieder Videoinformation VI übertragen werden kann. Die zuvor beschriebene Umschaltung in Abhängigkeit von den durch den Bewegungserkenner BE erkannten unbewegten Zeilen geschieht zusätzlich, so daß die für die Übertragung von Dokumenteninformation DI zur Verfügung stehende Kanalkapazität wesentlich erweitert wird.

Im Rahmen der Dokumenteninformation DI ist auch vorgesehen, Positionsinformationen zu übertragen, die beispielsweise von einem Lichtgriffel LG erzeugt werden, wenn auf dem am Dokumentenbildschirm DBS angezeigten Standbild bestimmte Stellen markiert, verändert oder ausradiert werden sollen. Auch hierbei tritt bei Anwendung des erfindungsgemäßen Verfahrens kein bemerkbarer Zeitverzug auf, so daß die von einer sendenden Stelle bewirkte Änderung der Vorlage sofort auf dem Dokumentenbildschirm DBS der Empfangsstelle erscheint.

Es kann außerdem vorgesehen sein, daß die Dokumenteninformationssteuerung DIS einen Befehl erzeugt, womit der Bewegungserkenner BE aktiviert wird. Dabei ergibt sich der Vorteil, daß die zusätzlichen Umschaltungen der Kanalmischer KM nur dann vorgenommen werden, wenn Dokumenteninformation DI zu übertragen ist. Mit einem derartigen Aktivierungsbefehl könnte außerdem auch das Umschalten während der vertikalen Austastlücke gesperrt bzw. frei gegeben werden.

**Patentansprüche**

**1.** Verfahren zur Erweiterung der für die Übertragung von Dokumenteninformation vorgesehenen Kanalkapazität innerhalb eines für die Übertragung von Videoinformation vorhandenen digitalen Übertragungskanals, wobei für die Übertragung von Dokumenteninformation auch die vertikalen Austastlücken der Videoinformation benutzbar sind, wenn solche übertragen werden und wobei die Dokumenteninformation sowie die Videoinformation an der Sende- und Empfangsseite auf separaten Bildschirmen dargestellt wird, dadurch gekennzeichnet,

daß durch einen Bewegungserkenner (BE) festgestellt wird, welche Teile der Videoinformation (VI) keine Bewegung aufweisen,

daß dann über einen Kanalmischer (KM) die Dokumenteninformation (DI) nicht nur während vorhandener Austastlücken sondern auch zusätzlich während der für die Übertragung unbewegter Teile eines Bildes zur Verfügung stehenden Zeiten anstelle der Videoinformation (VI) auf den Übertragungskanal (ÜK) geschaltet wird, wobei ein besonderes Umschaltekriterium in den Datenstrom eingefügt wird, um auf der Empfangsseite ebenfalls eine Umschaltung zu bewirken.

2.  Verfahren nach Anspruch 1,
    dadurch gekennzeichnet,
    daß die Erkennung von Bewegungen eines Bildes im Bewegungserkenner (BE) durch zeilenweise Analyse erfolgt, und daß diejenigen Zeilen eines Bildes, die keine Veränderung aufweisen, für die Übertragung von Dokumenteninformation (DI) benutzt werden.

3.  Verfahren nach Anspruch 1,
    dadurch gekennzeichnet,
    daß der Bewegungserkenner (BE) nur dann aktiviert wird, wenn Dokumenteninformation (DI) zu übertragen ist.

4.  Verfahren nach einem der Ansprüche 1 oder 3,
    dadurch gekennzeichnet,
    daß auch handschriftliche Änderungen oder Hinweise an Dokumenten wie Dokumenteninformation (DI) übertragen wird.

## Claims

1.  Method for the expanding of the channel capacity, provided for the transmission of document information, within a digital transmission channel present for the transmission of video information, wherein also the vertical blanking intervals of the video information are usable for the transmission of document information, if such are transmitted, and wherein the document information as well as the video information are represented at the transmission and reception ends on separate image screens, characterised thereby that it is established through a movement detector (BE) which parts of the video information (VI) have no movement, that then by way of a channel mixer (KM) the document information (DI) is switched to the transmission channel (ÜK) instead of the video information (VI) not only during present blanking intervals but additionally also during the times standing at disposal for the transmission of unmoved parts of an image, wherein a separate switching-over criterion is inserted into the data flow in order to likewise effect a switch-over at the reception end.

2.  Method according to claim 1, characterised thereby that the detecting of movements of an image in the movement detector (BE) takes place through line-by-line analysis, and that those lines of an image which have no change are used for the transmission of document information (DI).

3.  Method according to claim 1, characterised thereby that the movement detector (BE) is activated only then when document information (DI) is transmitted.

4.  Method according to one of the claims 1 or 3, characterised thereby that handwritten changes or references to documents are also transmitted as document information (DI).

## Revendications

1.  Procédé pour étendre la capacité en canaux prévue pour la transmission d'une information de document, à l'intérieur d'un canal numérique de transmission présent pour la transmission d'une information vidéo, et selon lequel pour la transmission d'une information de document, on peut également utiliser les intervalles de suppression verticaux de l'information vidéo, lorsque de telles informations sont transmises, et selon lequel l'information de document et l'information vidéo sont représentées sur le côté émission et sur le côté réception sur des écrans séparés, caractérisé en ce qu'un dispositif (BE) d'identification de déplacements détermine quelles parties de l'information vidéo (DI) n'ont aucun déplacement, que l'information de document (DI) est commutée, par l'intermédiaire d'un mélangeur de canaux (KM), non seulement pendant les intervalles présents de suppression, mais également en outre pendant les intervalles de temps disponibles pour la transmission de parties immobiles d'une image, à la place de l'information vidéo (VI), sur le canal de transmission (ÜK), auquel cas un critère particulier de commutation est inséré dans le flux des données pour provoquer également une commutation sur le côté réception.

2. Procédé selon la revendication 1, caractérisé en ce
que l'identification de déplacements d'une image dans le dispositif (BE) d'identification de déplacements est réalisée au moyen d'une analyse ligne par ligne et que les lignes d'une image, qui ne présentent aucune modification, sont utilisées pour la transmission de l'information de document (DI).

3. Procédé selon la revendication 1, caractérisé en ce
que le dispositif (BE) d'identification de déplacements n'est activé que lorsque l'information de document (DI) doit être transmise.

4. Procédé selon l'une des revendications 1 ou 3, caractérisé en ce
que des modifications ou des indications manuscrites sur des documents sont transmises comme l'information de document (DI).

VK  BIS  VBS  VBS

VI

BI

BE  ÜK  ÜK  KM

KM

DI  DBS  DBS

DIS

LG

DAE

EP 0 269 787 B1